(19) Europäisches Patentamt
European Patent Office
Office européen des brevets

(11) **EP 0 986 158 A1**

(12) **EUROPÄISCHE PATENTANMELDUNG**

(43) Veröffentlichungstag:
**15.03.2000 Patentblatt 2000/11**

(51) Int. Cl.[7]: **H02H 9/04**, H04M 3/18,
H02H 9/06

(21) Anmeldenummer: **98117215.8**

(22) Anmeldetag: **11.09.1998**

(84) Benannte Vertragsstaaten:
**AT BE CH CY DE DK ES FI FR GB GR IE IT LI LU MC NL PT SE**
Benannte Erstreckungsstaaten:
**AL LT LV MK RO SI**

(71) Anmelder:
**Siemens Building Technologies AG
8708 Männedorf (CH)**

(72) Erfinder: **Alvarez, Angel
8606 Greifensee (CH)**

(74) Vertreter: **Dittrich, Horst, Dr.
Siemens Building Technologies AG,
Cerberus Division
8708 Männedorf (CH)**

(54) **Ueberspannungsschutzeinrichtung für Telefonanschlüsse**

(57)     Die Überspannungsschutzeinrichtung (1) weist zwei Stufen (5, 6) auf Die erste Stufe (5) ist zum Schutz gegen Blitzeinwirkung vorgesehen und enthält einen ersten und einen zweiten Überspannungsableiter (7 bzw. 7'), und die zweite Stufe (6) ist zum Schutz im Wechselstrombereich vorgesehen und enthält einen dritten Überspannungsableiter (8) sowie zwei Entkopplungsinduktivitäten (10, 10') und zwei Thermoschalter (9, 9'). Zusätzlich weist die zweite Stufe (6) zwei zum Schutz gegen von der Abonnentenseite her kommende Wechselströme vorgesehene Thermosicherungen (11, 11') auf. Die Thermoschalter (9, 9'), die Thermosicherungen (11, 11') und der dritte Überspannungsableiter (8) sind thermisch gekoppelt. Der erste und der zweite Überspannungsableiter (7, 7') sind durch Zweipol-Überspannungsableiter und der dritte Überspannungsableiter (8) ist durch einen Dreipol-Überspannungsableiter gebildet.

Diese zweistufige Schutzschaltung gewährleistet einen zuverlässigen Blitz- und Überspannungsschutz, ohne dass es bei von der Telefonleitung kommenden Störungen zu dauernden Unterbrechungen dieser Leitung kommt. Ausserdem sorgen der Dreipol-Überspannungsableiter (8) und die Entkopplungsaktivitäten (10, 10') für einen symmetrischen Schutz.

**Beschreibung**

Die vorliegende Erfindung betrifft eine Überspannungsschutzeinrichtung für Telefonanschlüsse, mit Überspannungsableitern zum Schutz gegen Blitzeinwirkung.

Bei einer bekannten Einrichtung dieser Art wird der Überspannungsschutz ausschliesslich durch zwei zwischen den Leitungen und einer Erdung geschaltete Überspannungsableiter übernommen, an deren Leitungsseite eine Schmelzsicherung vorgesehen ist. Vor der Sicherung liegt eine Grobfunkenstrecke, welche erst bei einigen kV anspricht und die Aufgabe hat, nach dem Abschmelzen der Sicherung einen Durchschlag vom Einführungskabel gegen Erde zu verhindern. Bei dieser bekannten Einrichtung führen ein direkter Blitzeinschlag in die Leitung oder der bei einem Blitzeinschlag im Boden auftretende Spannungsabfall oder überlagerte Wechselspannungen dazu, dass die Sicherungen schmelzen und die Telefonleitung dauernd unterbrochen wird.

Durch die Erfindung soll nun eine Schutzeinrichtung der eingangs genannten Art angegeben werden, welche Schutz gegen Blitzeinwirkung und Wechselspannungen bietet, ohne die Telefonleitung dauernd zu unterbrechen.

Diese Aufgabe wird erfindungsgemäss dadurch gelöst, dass die Einrichtung zwei Stufen aufweist, von denen die erste Stufe zum Schutz gegen Blitzeinwirkung vorgesehen ist und einen ersten und einen zweiten Überspannungsableiter aufweist, und die zweite Stufe zum Schutz im Wechselstrombereich vorgesehen ist und einen dritten Überspannungsableiter sowie zwei Entkopplungsinduktivitäten und zwei Thermoschalter enthält.

Die erste Schutzstufe übernimmt also den Schutz gegen Blitzeinwirkung und transiente Ströme ohne die Telefonleitung zu unterbrechen. Die Thermoschalter in der zweiten Schutzstufe unterbrechen bei einer bestimmten, durch eine Wechselspannung am dritten Überspannungsableiter verursachten Temperatur die Leitung zum Abonnenten und schalten diese nach erfolgtem Absinken der Temperatur automatisch wieder ein. Sollte die Wechselspannung immer noch anliegen, wiederholt sich der Vorgang bis die Störung abgeklungen ist. Stossströme werden also abgeleitet, ohne die Telefonleitung zu unterbrechen, und bei der Ableitung von Wechselströmen wird die Telefonleitung nur kurzzeitig unterbrochen und nach der Ableitung der Wechselströme automatisch wieder eingeschaltet. Da keine Schmelzsicherungen notwendig sind, entfällt das bisherige lästige Auswechseln der Sicherungen nach der Ableitung von Stossströmen oder Wechselströmen während der Gewittersaison.

Eine erste bevorzugte Ausführungsform der erfindungsgemässen Einrichtung ist dadurch gekennzeichnet, dass der erste und der zweite Überspannungsableiter durch einen Zweipol- und der dritte Überspannungsableiter durch einen Dreipol-Überspannungsableiter gebildet sind.

Eine zweite bevorzugte Ausführungsform der erfindungsgemässen Einrichtung ist dadurch gekennzeichnet, dass die Thermoschalter und der dritte Überspannungsableiter thermisch gekoppelt sind.

Eine dritte bevorzugte Ausführungsform der erfindungsgemässen Schutzeinrichtung ist dadurch gekennzeichnet dass die zweite Stufe zusätzlich zwei zum Schutz gegen von der Abonnentenseite her kommende Wechselströme vorgesehene Thermosicherungen aufweist. Diese Thermosicherungen sind mit dem dritten Überspannungsableiter thermisch gekoppelt.

Derartige Wechselströme, gegen die bisher kein zuverlässiger Schutz möglich war, werden durch an den Telefonanschluss des Teilnehmers angeschlossene elektrische oder elektronische Geräte, wie beispielsweise Modems oder Faxgeräte, oder durch Fehlmanipulationen von Dritten verursacht.

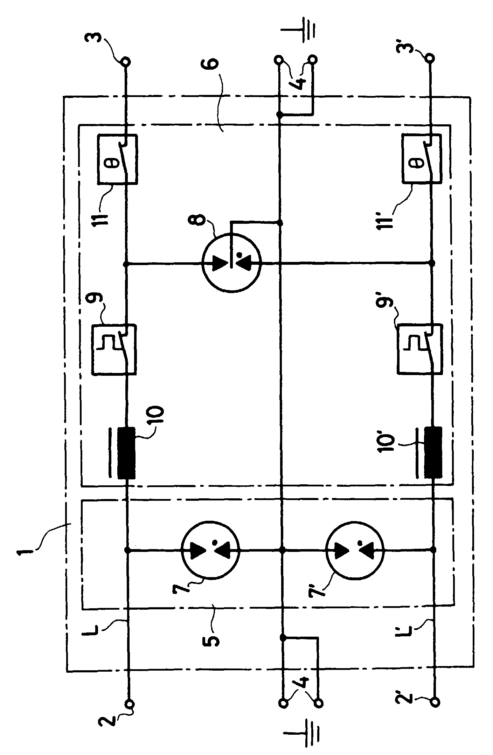

Im folgenden wird die Erfindung anhand eines in der einzigen Zeichnung dargestellten Ausführungsbeispiels, welches ein Blockschema einer erfindungsgemässen Schutzeinrichtung zeigt, näher erläutert. Darstellungsgemäss weist die mit dem Bezugszeichen 1 bezeichnete Schutzeinrichtung zwei Eingangsklemmen 2 und 2' zum Anschluss an eine Telefonleitung und zwei Ausgangsklemmen 3 und 3' zum Anschluss der Abonnentenleitung sowie Klemmen 4 zum Anschluss an Erde auf, wobei einander zugeordnete Klemmen 2 und 3, 2'und 3' und die Erdungsklemmen jeweils elektrisch leitend verbunden sind. Die Verbindungsleitungen zwischen den Ein- und Ausgangsklemmen 2,2' bzw. 3, 3' sind mit L bzw. L' bezeichnet.

Die Schutzeinrichtung 1 besteht aus einer ersten Stufe 5 zum Schutz gegen Blitzeinwirkung und transiente Überspannungen und aus einer zweiten Stufe 6 zum Schutz im Wechselstrombereich. Die erste Stufe 5 ist mit zwei 2-Pol-Überspannungsableitern 7, 7' aufgebaut, wobei der symmetrische Schutz bei Blitzeinwirkung durch die zweite Stufe 6 sichergestellt ist. Die zweite Stufe 6 ist mit einem 3-Pol-Überspannungsableiter 8, zwei Thermoschaltern 9 und 9', zwei Entkopplungsinduktivitäten 10 und 10' und zwei Thermosicherungen 11 und 11' aufgebaut, wobei die Thermosicherungen 11, 11', die Thermoschalter 9, 9' und der 3-Pol-Überspannungsableiter 8 thermisch gekoppelt sind.

Bei einem Blitzschlag zündet zuerst der 3-Pol-Überspannungsableiter 8 und es fliesst ein Strom I über die Entkopplungsinduktivitäten 10 und 10' (Induktivität L), in denen sich dabei eine Spannung U nach der Formel $U = L(dI/dt)$ aufbaut. Diese Spannung zündet bei Erreichen eines bestimmten Werts die beiden 2-Pol-Überspannungsableiter 7 und 7' und der Blitzstrom wird gegen Erde abgeleitet, ohne dass es zu einer Unterbrechung der Telefonleitung kommt.

Wenn nur die beiden 2-Pol-Überspannungsableiter 7 und 7' vorhanden wären, dann würde wegen der unvermeidbaren Fertigungstoleranzen immer ein Ableiter früher ansprechen als der andere, wodurch zwischen den beiden Leitungen L und L' eine Überspannung oder Querspannung entstehen würde, die bekanntlich für die angeschlossenen elektrischen Geräte sehr gefährlich ist. Eine solche Querspannung kann bei der dargestellten Schutzeinrichtung wegen des 3-Pol-Überspannungsableiters 8 und der Entkopplungsinduktivitäten 10 und 10', die zusammen einen symmetrischen Schutz gewähren, nicht entstehen.

Durch die zweite Stufe 6 werden durch Wechselspannungen verursachte Wechselströme abgeleitet. Solche Wechselströme treten insbesondere dann auf, wenn es zu einem Kontakt zwischen der Telefon- und einer Stromleitung kommt, was wegen der Kreuzungen zwischen Telefonfreileitungen und Niederspannungsleitungen bei besonderen Witterungsverhältnissen, beispielsweise bei Nassschneefall, immer wieder vorkommt.

Derartige Wechselströme werden durch den 3-Pol-Überspannungsableiter 8 abgeleitet, der sich dabei erwärmt. Sobald seine Temperatur die Ansprechtemperatur der Thermoschalter 9, 9' von beispielsweise etwa 70°C erreicht, öffnet sich der betreffende Thermoschalter und unterbricht die Leitung zum Ableiter 8 und zum Abonnenten. Diese kurze Unterbrechung wird automatisch wieder beendet, wenn die Temperatur des Ableiters 8 entsprechend abgesunken ist. Während des gesamten Vorgangs wird durch die erste Stufe 5 der Schutz gegen Blitzeinwirkung und transiente Überspannungen aufrecht erhalten.

Die Thermosicherungen 11 und 11' sorgen dafür, dass die Ableitung von langanhaltenden, von der geschützten Teilnehmerseite kommenden Wechselströmen auf keinen Fall einen Brand verursachen können. Derartige Wechselströme können durch an den Telefonanschluss des Teilnehmers angeschlossene elektrische und elektronische Geräte, wie beispielsweise Faxgeräte oder Modems, oder durch Fehlmanipulationen verursacht werden. Auch diese Wechselströme werden durch den 3-Pol-Überspannungsableiter 8 abgeleitet, der sich dabei erwärmt. Wenn seine Temperatur einen kritischen Wert von beispielsweise etwa 100°C erreicht, wird die Sicherheitseinrichtung 1 von der betreffenden Thermosicherung 11 oder 11' abgeschaltet. In diesem Fall, der allerdings in der Praxis nur sehr selten auftritt, ist die Telefonleitung dauernd unterbrochen und es muss zur Wiederherstellung von dieser die Schutzeinrichtung 1 ersetzt werden.

Die Schutzeinrichtung 1 weist die folgenden Vorteile auf:

■ Redundanter, bidirektionaler Schutz durch zweifachen Überstromschutz.
■ Blitzstromableitung ohne Unterbrechung der Telefonleitung.
■ Wechselstromableitung ohne dauernde Unterbrechung der Telefonleitung.

■ Keine Schmelzsicherung notwendig, daher kein lästiges Auswechseln von Sicherungen nach der Ableitung von Stoss- oder Wechselströmen während der Gewittersaison.
■ Selektiver thermischer Überstromschutz mit automatischer Wiedereinschaltung nach der Ableitung von Wechselströmen.
■ Brandschutz durch thermische, bidirektionale Überwachung der Ableiter für den seltenen Fall einer Ableitung von langdauernden Wechselströmen.

**Patentansprüche**

1. Überspannungsschutzeinrichtung für Telefonanschlüsse, mit Überspannungsableitern (7, 7'; 8) zum Schutz gegen Blitzeinwirkung, dadurch gekennzeichnet, dass die Einrichtung (1) zwei Stufen (5, 6) aufweist, von denen die erste Stufe (5) zum Schutz gegen Blitzeinwirkung vorgesehen ist und einen ersten und einen zweiten Überspannungsableiter (7 bzw. 7') aufweist, und die zweite Stufe (6) zum Schutz im Wechselstrombereich vorgesehen ist und einen dritten Überspannungsableiter (8) sowie zwei Entkopplungsinduktivitäten (10, 10') und zwei Thermoschalter (9, 9') enthält.

2. Schutzeinrichtung nach Anspruch 1, dadurch gekennzeichnet, dass der erste und der zweite Überspannungsableiter (7, 7') durch einen Zweipol- und der dritte Überspannungsableiter (8) durch einen Dreipol-Überspannungsableiter gebildet sind.

3. Schutzeinrichtung nach Anspruch 2, dadurch gekennzeichnet, dass die Thermoschalter (9, 9') und der dritte Überspannungsableiter (8) thermisch gekoppelt sind.

4. Schutzeinrichtung nach Anspruch 3, dadurch gekennzeichnet, dass die zweite Stufe (6) zusätzlich zwei zum Schutz gegen von der Abonnentenseite her kommende Wechselströme vorgesehene Thermosicherungen (11, 11') aufweist.

5. Schutzeinrichtung nach Anspruch 4, dadurch gekennzeichnet, dass die Thermosicherungen (11, 11') mit dem dritten Überspannungsableiter (8) thermisch gekoppelt sind.

6. Schutzeinrichtung nach einem der Ansprüche 2 bis 5, dadurch gekennzeichnet, dass bei einem Blitzschlag zuerst der dritte Überspannungsableiter (8) zündet und ein Strom über die Entkopplungsinduktivitäten (10, 10') fliesst, wodurch sich an diesen eine Spannung aufbaut, und dass bei Erreichen einer bestimmten Werts dieser Spannung der entsprechende Strom über den ersten und den zweiten Überspannungsableiter (7, 7') abgeleitet wird, ohne dass es zu einer Unterbrechung der Telefonleitung (L, L') kommt.

7. Schutzeinrichtung nach Anspruch 6, dadurch gekennzeichnet, dass die Ableitung von durch Wechselspannungen vom Telefonnetz her verursachten Wechselströmen durch den dritten Überspannungsableiter (8) erfolgt, wobei beim Erreichen der Ansprechtemperatur der Thermoschalter (9, 9') durch den dritten Überspannungsableiter (8) die Thermoschalter (9, 9') bis zu einer gewünschten Abkühlung des dritten Überspannungsableiters (8) kurzfristig geöffnet werden.

8. Schutzeinrichtung nach Anspruch 5, dadurch gekennzeichnet, dass die Ableitung von durch von der Teilnehmerseite kommenden Wechselströmen durch den dritten Überspannungsableiter (8) erfolgt, wobei beim Erreichen einer bestimmten Temperatur durch den dritten Überspannungsableiter (8) die Sicherheitseinrichtung (1) von der betreffenden Thermosicherung (11, 11') abgeschaltet wird.

| | Europäisches Patentamt | EUROPÄISCHER RECHERCHENBERICHT | Nummer der Anmeldung EP 98 11 7215 |
|---|---|---|---|

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.6) |
|---|---|---|---|
| X | WO 92 06523 A (RAYCHEM LTD) 16. April 1992 <br> * Seite 3, Zeile 34 - Seite 4, Zeile 35 * <br> * Seite 6, Zeile 1 - Zeile 13; Abbildung 1 * <br> --- | 1,2 | H02H9/04 <br> H04M3/18 <br> H02H9/06 |
| X | EP 0 690 539 A (KRONE AG) 3. Januar 1996 <br> * Seite 3, Zeile 3 - Zeile 52; Abbildung 1 * <br> --- | 1,2 | |
| X | WILLIAMS M ET AL: "CIRCUIT PROTECTION FOR TELEPHONE NETWORKS- NEEDS AND CO -ORDINATION" <br> RAYCHEM (ISBN 0-7803-2636-9), <br> 7. November 1995, Seiten 189-194, <br> XP000586569 <br> * Seite 192, Spalte 2, Absatz 2 - Seite 193, Spalte 1, letzter Absatz; Abbildung 3 * <br> --- | 1 | |
| A | GB 2 160 721 A (MEASUREMENT TECH LTD) 24. Dezember 1985 <br> * Zusammenfassung; Abbildung 3 * <br> --- | 1,2 | |
| E | WO 98 54813 A (AUSMUS NILE ;NELISSEN WILLY (AU); AUSTRALIAN PROTECTIVE ELECTRON ()) 3. Dezember 1998 <br> * Zusammenfassung; Abbildung 1 * <br> ----- | 1 | |

| RECHERCHIERTE SACHGEBIETE (Int.Cl.6) |
|---|
| H02H <br> H04M |

Der vorliegende Recherchenbericht wurde für alle Patentansprüche erstellt

| Recherchenort | Abschlußdatum der Recherche | Prüfer |
|---|---|---|
| BERLIN | 8. Februar 1999 | Hijazi, A |

## ANHANG ZUM EUROPÄISCHEN RECHERCHENBERICHT
## ÜBER DIE EUROPÄISCHE PATENTANMELDUNG NR.

EP 98 11 7215

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

08-02-1999

| Im Recherchenbericht angeführtes Patentdokument | Datum der Veröffentlichung | Mitglied(er) der Patentfamilie | | Datum der Veröffentlichung |
|---|---|---|---|---|
| WO 9206523 A | 16-04-1992 | AT | 146630 T | 15-01-1997 |
| | | AU | 648596 B | 28-04-1994 |
| | | AU | 8648691 A | 28-04-1992 |
| | | CA | 2092808 A | 29-03-1992 |
| | | DE | 69123746 D | 30-01-1997 |
| | | DE | 69123746 T | 03-04-1997 |
| | | DK | 550554 T | 06-01-1997 |
| | | EP | 0550554 A | 14-07-1993 |
| | | FI | 931382 A | 26-03-1993 |
| | | HU | 65313 A | 02-05-1994 |
| | | IE | 79442 B | 06-05-1998 |
| | | JP | 6501834 T | 24-02-1994 |
| | | RU | 2071161 C | 27-12-1996 |
| | | US | 5416663 A | 16-05-1995 |
| | | US | 5513059 A | 30-04-1996 |
| EP 0690539 A | 03-01-1996 | DE | 4423798 A | 11-01-1996 |
| | | BR | 9503039 A | 11-06-1996 |
| | | CA | 2148418 A | 02-01-1996 |
| | | CN | 1115551 A | 24-01-1996 |
| | | IL | 113323 A | 22-02-1998 |
| | | JP | 8033200 A | 02-02-1996 |
| | | PL | 309274 A | 08-01-1996 |
| | | US | 5808849 A | 15-09-1998 |
| GB 2160721 A | 24-12-1985 | KEINE | | |
| WO 9854813 A | 03-12-1998 | KEINE | | |

EPO FORM P0461

Für nähere Einzelheiten zu diesem Anhang : siehe Amtsblatt des Europäischen Patentamts, Nr.12/82